# EUROPÄISCHE PATENTSCHRIFT

(11) **EP 1 387 110 B1**
(45) Veröffentlichungstag und Bekanntmachung des Hinweises auf die Patenterteilung: **30.08.2006**
(21) Anmeldenummer: 03015281.3
(22) Anmeldetag: 07.07.2003
(51) Int. Cl.: F16F 9/06, F16F 9/46, E05C 17/30

(54) **Kolben-Zylinder-Einheit**
Piston-cylinder unit
Unité piston-cylindre

(30) Priorität: 27.07.2002 DE 10234355
(43) Veröffentlichungstag der Anmeldung: 04.02.2004
(73) Patentinhaber: Stabilus GmbH, D-56070 Koblenz (DE)
(72) Erfinder: Mintgen, Rolf, Dipl.-Ing., 56743 Thür (DE); Schwab, Wilhelm, Dipl.-Ing. (FH), 56564 Neuwied (DE); Muders, Paul, Dipl.-Ing., 56321 Rhens (DE); Born, Frank, Dipl-.Ing. (FH), 56379 Dienethal (DE); Stein, Andre, Dipl.-Ing. (FH), 56329 St. Goar-Werlau (DE)
(74) Vertreter: Klein, Thomas

(56) Entgegenhaltungen:
- EP-A- 0 362 716
- GB-A- 856 506
- GB-A- 987 111
- US-A- 2 788 867
- DATABASE WPI 94, Februar 1994 (1994-02) Derwent Publications Ltd., London, GB; Class 02, AN 1994-014743 XP002264068 & SU 1 783 191 A (GO AUTOMOBILNY), 23. Dezember 1992 (1992-12-23)

## Beschreibung

Die Erfindung bezieht sich auf eine Kolben-Zylinder-Einheit, mit einem geschlossenen Zylinder, in dem ein Kolben über eine ihn radial umschließende Ringdichtung gegenüber dem Zylinder abgedichtet axial verschiebbar geführt ist und den Zylinderinnenraum in einen kolbenstangenseitigen und einen kolbenstangenfernen Arbeitsraum unterteilt, die beide mit einem Fluid, insbesondere mit einer hydraulischen Flüssigkeit gefüllt sind, mit einer einseitigen Kolbenstange, die sich durch den kolbenstangenseitigen Arbeitsraum erstreckt und durch eine stirnseitige Verschlußwand des Zylinders dicht nach außen hindurchgeführt ist, mit einem ersten, unter Druck, insbesondere unter hohem Druck öffenbaren Ventil, über das der kolbenstangenferne Arbeitsraum mit dem kolbenstangenseitigen Arbeitsraum verbindbar ist und mit einem zweiten, unter hohem Druck öffenbaren Ventil, durch das der kolbenstangenseitige Arbeitsraum mit dem kolbenstangenfernen Arbeitsraum verbindbar ist, und mit einer Volumenausgleichskammer zur Aufnahme der gegenüber der Verdrängungsmenge des kolbenstangenseitigen Arbeitsraumes größeren Verdrängungsmenge des kolbenstangenfernen Arbeitsraums.

Eine derartige bekannte Kolben-Zylinder-Einheit besitzt eine Volumenausgleichskammer, die in einem Endbereich des Zylinders angeordnet und durch eine Trennwand von dem kolbenstangenfernen Arbeitsraum abgetrennt ist. Diese Ausbildung führt zu einer großen Baulänge und einem hohen Bauteilaufwand der Kolben-Zylinder-Einheit.

GB-A-987111 offenbart eine Kolben-Zylinder-Einheit mit einer in einem Kolbensansatz angeordneten Volumenausgleichskammer.

Aufgabe der Erfindung ist es daher eine Kolben-Zylinder-Einheit der eingangs genannten Art zu schaffen, die eine kompakte Bauweise mit wenigen Bauteilen ermöglicht.

Diese Aufgabe wird erfindungsgemäß dadurch gelöst, daß die Volumenausgleichskammer in dem Kolben angeordnet ist und der kolbenstangenferne Arbeitsraum über das erste Ventil sowie der kolbenstangenseitige Arbeitsraum über das zweite Ventil mit der Volumenausgleichskammer verbindbar ist und daß die Volumenausgleichskammer über ein erstes Rückschlagventil mit dem kolbenstangenfernen Arbeitsraum und über ein zweites Rückschlagventil mit dem kolbenstangenseitigen Arbeitsraum verbindbar ist.

Da nunmehr der Zylinder verkürzt ausgebildet werden kann und auch der Kolben allenfalls nur geringfügig verlängert werden muß, wird eine sehr kompakte Kolben-Zylinder-Einheit erreicht. Die Integration der Volumenausgleichskammer in den Kolben führt weiterhin zu einer Reduzierung der erforderlichen Bauteile und damit auch zu einer erheblichen Kostenreduzierung für die Kolben-Zylinder-Einheit.

Die Kolben-Zylinder-Einheit kann z.B. als Stoßdämpfer verwendet werden.

Eine andere vorteilhafte Möglichkeit besteht in der Verwendung als stufenlos wirkender Türfeststeller insbesondere für eine Tür eines Kraftfahrzeugs.

Damit das Volumen der Volumenausgleichskammer immer dem aufzunehmenden Volumen des Fluids entspricht, kann das Volumen der Volumenausgleichskammer unter Druckbelastung vergrößerbar und unter Druckentlastung verringerbar sein.

Eine geeignete Ausbildung besteht dazu darin, daß in der Volumenausgleichskammer ein unter Druckbelastung sein Volumen reduzierendes und unter Druckentlastung sein Volumen vergrößerndes Volumenausgleichselement angeordnet ist.

In einer anderen geeigneten Ausbildung einfachen Aufbaus weist die Volumenausgleichskammer eine insbesondere als elastische Membran ausgebildete flexible Wand auf.

Das erste und/oder das zweite unter hohem Druck öffenbare Ventil kann ein drittes und/oder viertes kraftbelastetes Rückschlagventil sein, wobei in einfacher Ausbildung das erste und/oder das zweite unter hohem Druck öffenbare Ventil ein Schließglied aufweist, das durch eine Druckfeder, insbesondere durch eine Schraubendruckfeder oder eine Tellerdruckfeder in Schließrichtung belastet ist.

Eine Möglichkeit des ersten und/oder des zweiten Ventils besteht darin, daß das erste und/oder das zweite unter hohem Druck öffenbare Ventil ein Sitzventil ist.

In gleicher Weise vorteilhaft kann das erste und/oder zweite unter hohem Druck öffenbare Ventil ein Schieberventil sein.

Zur sicheren Führung der Schließglieder kann das erste und/oder das zweite unter hohem Druck öffenbare Ventil eine in dem Kolben ausgebildete Ventilkammer aufweisen, in der ein Ventilkolben dicht verschiebbar geführt ist, der ein Schließglied trägt, das in Schließrichtung kraftbeaufschlagt und in Öffnungsrichtung vom Druck eines der Arbeitsräume beaufschlagt ist und durch das der Ventildurchgang des ersten und/oder zweiten unter hohem Druck öffenbaren Ventils absperrbar ist.

Um bei stillstehendem Kolben ein Schließen des ersten und/oder zweiten Ventils sicher zu stellen, kann das Schließglied oder der Ventilkolben in Schließrichtung federbeaufschlagt sein.

Dies kann durch eine Schraubendruckfeder erfolgen.

Eine andere Möglichkeit besteht darin, daß das Schließglied oder der Ventilkolben in Schließrichtung von einem oder mehreren an dem Kolben abgestützten Federarmen in Schließrichtung kraftbeaufschlagt ist, deren Kraft auf dem Bewegungsweg des Schließglieds oder des Ventilkolbens in die Öffnungsstellung zumindest im letzten Teil des Bewegungsweges degressiv und in der Öffnungsstellung zumindest weitgehend null ist. Dies hat den Vorteil, daß während einem Verschieben des Kolbens das Schließglied oder der Ventilkolben in seiner Offenstellung verbleibt und es insbesondere bei einer langsamen Kolbenbewegung nicht zu einer Flatterbewegung des Schließglieds kommt.

Eine andere Möglichkeit zur Kraftbeaufschlagung des Schließglieds oder des Ventilkolbens besteht darin, daß das Schließglied oder der Ventilkolben in Schließrichtung durch Magnetkräfte beaufschlagt ist. Auch dabei fällt die Schließkraft nach einem Öffnen des Schließgliedes schnell stark ab.

Dies wird auf einfache Weise dadurch erreicht, daß an dem Ventilkolben oder dem Kolben ein Dauermagnet und dem Dauermagnet in Bewegungsrichtung des Ventilkolbens gegenüberliegend am Kolben oder Ventilkolben ein ferromagnetisches Bauteil angeordnet ist.

Um das Schließglied während des Verschiebens sicher in seiner Offenstellung zu halten, kann das Schließglied oder der Ventilkolben in der Öffnungsstellung des ersten und/oder zweiten Ventils mit einer Haltekraft haltbar ist, die kleiner als die entgegengerichtete Schließkraft ist, in Addition mit einer Druckbeaufschlagung des Ventils aber größer ist.

Eine vorteilhaft aufgebaute Möglichkeit besteht darin, daß der Ventilkolben oder der Kolben in der Öffnungsstellung mit einem Rastelement in eine Raste des Kolbens oder des Ventilkolbens einrastbar ist und die Ausrastkraft des Rastelements aus der Raste die Haltekraft ist.

Schließlich kann auch an dem Kolben eine Schnappfeder angeordnet sein, die mit dem freien Ende ihres Schnapparmes an dem Kolben abgestützt ist, wobei in der Schließstellung des Ventilkolbens der Schnapparm in Axialrichtung zumindest weitgehend kraftlos an dem Kolben in Anlage ist und in der Öffnungsstellung des Ventilkolbens den Kolben die Haltekraft erzeugend beaufschlagt.

Zur Verstärkung der Schließkraft kann auf der dem Schließglied abgewandten Seite an dem Ventilkolben ein Dauermagnet und diesem zugewandt an dem Kolben ein weiterer Dauermagnet einander abstoßend angeordnet sein.

Eine bauraum- und bauteilsparende Integration von Funktionen ergibt sich, wenn die Ringdichtung des Kolbens das erste und das zweite Rückschlagventil bildend ausgebildet sind.

In einfacher Weise kann dazu die Ringdichtung im axialen Abstand voneinander zwei Ringdichtlippen aufweisen, deren an der Innenwand des Zylinders anliegende freien Endbereiche voneinander weg gerichtet sind und daß die Volumenausgleichskammer über eine Verbindungsleitung mit dem Raum zwischen den Ringdichtlippen verbunden ist, wobei die Ringdichtlippen zwei separate Bauteile oder auch in ihrem Fußbereich miteinander verbunden sein können.

Eine andere, ebenfalls einfache Möglichkeit besteht darin, daß die Ringdichtung des Kolbens einen elastisch an der Innenwand des Zylinders anliegenden Dichtring aufweist, an dessen am Kolben angeordneten Fußbereich gegensinnig axial sich wegerstreckende Ventilklappen angeformt sind, durch die radial am Kolben in den Zylinder mündende Verbindungsleitungen verschließbar sind, die zur Volumenausgleichskammer führen.

Ausführungsbeispiele der Erfindung sind in der Zeichnung dargestellt und werden im folgenden näher beschrieben. Es zeigen
- Figur 1: einen Querschnitt eines ersten Ausführungsbeispiels einer Kolben-Zylinder-Einheit
- Figur 2: eine symbolische Querschnittsansicht eines zweiten Ausführungsbeispiels einer Kolben-Zylinder-Einheit
- Figur 3: eine symbolische Querschnittsansicht eines dritten Ausführungsbeispiels einer Kolben-Zylinder-Einheit
- Figur 4: eine symbolische Querschnittsansicht eines vierten Ausführungsbeispiels einer Kolben-Zylinder-Einheit
- Figur 5: eine symbolische Querschnittsansicht eines fünften Ausführungsbeispiels einer Kolben-Zylinder-Einheit
- Figur 6: eine symbolische Querschnittsansicht eines sechsten Ausführungsbeispiels einer Kolben-Zylinder-Einheit
- Figur 7: eine symbolische Querschnittsansicht eines siebten Ausführungsbeispiels einer Kolben-Zylinder-Einheit
- Figur 8: eine symbolische Querschnittsansicht eines achten Ausführungsbeispiels einer Kolben-Zylinder-Einheit
- Figur 9: eine symbolische Querschnittsansicht eines neunten Ausführungsbeispiels einer Kolben-Zylinder-Einheit
- Figur 10: eine symbolische Querschnittsansicht eines zehnten Ausführungsbeispiels einer Kolben-Zylinder-Einheit
- Figur 11: eine symbolische Querschnittsansicht eines elften Ausführungsbeispiels einer Kolben-Zylinder-Einheit
- Figur 12: eine symbolische Querschnittsansicht eines zwölften Ausführungsbeispiels einer Kolben-Zylinder-Einheit
- Figur 13: eine symbolische Querschnittsansicht eines dreizehnten Ausführungsbeispiels einer Kolben-Zylinder-Einheit
- Figur 14: eine symbolische Querschnittsansicht eines vierzehnten Ausführungsbeispiels einer Kolben-Zylinder-Einheit
- Figur 15: eine symbolische Querschnittsansicht eines fünfzehnten Ausführungsbeispiels einer Kolben-Zylinder-Einheit
- Figur 16: einen Querschnitt eines ersten Ausführungsbeispiels eines Ausschnitts im Bereich der Ringdichtung einer Kolben-Zylinder-Einheit
- Figur 17: einen Querschnitt eines zweiten Ausführungsbeispiels eines Ausschnitts im Bereich der Ringdichtung einer Kolben-Zylinder-Einheit
- Figur 18: einen Querschnitt eines dritten Ausführungsbeispiels eines Ausschnitts im Bereich der Ringdichtung einer Kolben-Zylinder-Einheit
- Figur 19: einen Querschnitt eines vierten Ausführungsbeispiels eines Ausschnitts im Bereich der Ringdichtung einer Kolben-Zylinder-Einheit
- Figur 20: einen Querschnitt eines fünften Ausführungsbeispiels eines Ausschnitts im Bereich der Ringdichtung einer Kolben-Zylinder-Einheit
- Figur 21: einen Querschnitt eines sechsten Ausführungsbeispiels eines Ausschnitts im Bereich der Ringdichtung einer Kolben-Zylinder-Einheit
- Figur 22: einen Querschnitt eines siebten Ausführungsbeispiels eines Ausschnitts im Bereich der Ringdichtung einer Kolben-Zylinder-Einheit
- Figur 23: einen Querschnitt eines achten Ausführungsbeispiels eines Ausschnitts im Bereich der Ringdichtung einer Kolben-Zylinder-Einheit
- Figur 24: einen Querschnitt eines neunten Ausführungsbeispiels eines Ausschnitts im Bereich der Ringdichtung einer Kolben-Zylinder-Einheit
- Figur 25: einen Querschnitt eines ersten Ausführungsbeispiels eines Schließgliedes eines unter Druck öffnenden Ventils einer Kolben-Zylinder-Einheit
- Figur 26: einen Querschnitt eines zweiten Ausführungsbeispiels eines Schließgliedes eines unter Druck öffnenden Ventils einer Kolben-Zylinder-Einheit
- Figur 27: einen Querschnitt eines dritten Ausführungsbeispiels eines Schließgliedes eines unter Druck öffnenden Ventils einer Kolben-Zylinder-Einheit
- Figur 28: einen Querschnitt eines vierten Ausführungsbeispiels eines Schließgliedes eines unter Druck öffnenden Ventils einer Kolben-Zylinder-Einheit
- Figur 29: einen Querschnitt eines fünften Ausführungsbeispiels eines Schließgliedes eines unter Druck öffnenden Ventils einer Kolben-Zylinder-Einheit
- Figur 30: einen Querschnitt eines sechsten Ausführungsbeispiels eines Schließgliedes eines unter Druck öffnenden Ventils einer Kolben-Zylinder-Einheit
- Figur 31: einen Querschnitt eines siebten Ausführungsbeispiels eines Schließgliedes eines unter Druck öffnenden Ventils einer Kolben-Zylinder-Einheit
- Figur 32: einen Querschnitt eines achten Ausführungsbeispiels eines Schließgliedes eines unter Druck öffnenden Ventils einer Kolben-Zylinder-Einheit
- Figur 33: einen Querschnitt eines neunten Ausführungsbeispiels eines Schließgliedes eines unter Druck öffnenden Ventils einer Kolben-Zylinder-Einheit.

Die in den Figuren dargestellten Kolben-Zylinder-Einheiten sind stufenlos wirkende Türfeststeller für Kraftfahrzeuge. Sie besitzen einen geschlossenen Zylinder 1, in dem ein Kolben 2 verschiebbar geführt ist, der den Innenraum des Zylinders 1 in einen kolbenstangenseitigen Arbeitsraum 3 und eine kolbenstangenfernen Arbeitsraum 4 unterteilt. Beide Arbeitsräume 3 und 4 sind mit Öl gefüllt.

Einseitig ist an dem Kolben 2 eine Kolbenstange 5 angeordnet, die sich durch den Arbeitsraum 3 erstreckt und durch eine Dichtung 10 sowie eine stirnseitige Verschlußwand 6 des Zylinders 1 dicht nach außen hindurchgeführt ist.

In dem Arbeitsraum 3 ist an die Verschlußwand 6 angrenzend eine Endlagendämpfung 7 angeordnet, die aus einem in dem Arbeitsraum 3 frei axial verschiebbaren Dämpfkolben 8 und einer zwischen dem Dämpfkolben 8 und der Verschlußwand 6 angeordneten Druckfeder 9 besteht.

Zur Befestigung der Kolbenstange 5 an dem Kolben 2 besitzt dieser einen koaxial hervorstehenden Ansatz 11 mit einer Koaxialbohrung 12, in deren der Mündung nahen Bereich die Kolbenstange 5 mit ihrem einen Ende fest eingesetzt ist.

In den dem Kolben 2 näheren Bereich der Koaxialbohrung 12, bis zu dem die Kolbenstange 5 nicht reicht, münden zwei Radialbohrungen 13 und verbinden die Koaxialbohrung 12 mit dem Arbeitsraum 3.

Kolbenseitig mündet die Koaxialbohrung 12 in eine im Kolben 2 ausgebildete Ventilkammer 14, in der ein Ventilkolben 15 durch eine ihn radial umschließende Dichtung 19 dicht axial verschiebbar angeordnet ist. Der Ventilkolben 15 ist mit einem Schließglied 16 versehen, das das Schließglied eines Sitzventils ist und koaxial der als Ventilsitz ausgebildeten Mündung der Koaxialbohrung 12 in die Ventilkammer 14 gegenüber liegt. Durch eine am Boden 17 der Ventilkammer 14 abgestützte Schraubendruckfeder 18 ist der Ventilkolben 15 mit seinem Schließglied 16 gegen die Mündung der Koaxialbohrung 12 diese verschließend beaufschlagt.

Mit Ausnahme des Ansatzes 11 ist die dem Arbeitsraum 4 zugewandte Seite des Kolbens 2 genauso aufgebaut wie die dem Arbeitsraum 3 zugewandte Seite und die entsprechenden Bauteile mit den Bezugszeichen 12', 14', 15', 16', 17', 18' und 19' versehen.

Zwischen den beiden Böden 17 und 17' ist in dem Kolben 2 eine Volumenausgleichskammer 20 ausgebildet, die permanent über eine erste Verbindungsleitung 21 mit den zwischen den Ventilkolben 15 und 15' und den jeweiligen Stirnwänden 22 und 22' des Kolbens 2 gebildeten Räume 60 und 60' verbunden ist.

In der Volumenausgleichskammer 20 ist ein Volumenausgleichselement 23 angeordnet, das unter Druckbelastung sein Volumen reduziert und unter Druckentlastung vergrößert.

Von der ersten Verbindungsleitung 21 führen zwei in Längserstreckungsrichtung des Kolbens 2 im Abstand voneinander ausgebildete Verbindungsleitungen 24 und 25 radial nach außen und münden an der radial umlaufenden Mantelfläche des Kolbens 2. Durch elastische Ventilklappen 26 und 27 von ersten und zweiten Rückschlagventilen 36 und 37 sind die Mündungen der Verbindungsleitungen 24 und 25 in den Spalt zwischen der radial umlaufenden Mantelfläche des Kolbens 2 und der Innenwand des Zylinders 1 verschließbar.

An ihren einander zugewandten Enden sind die Ventilklappen 26 und 27 mit einem den Kolben 2 im Bereich zwischen den Verbindungsleitungen 24 und 25 radial umschließenden Dichtring 28 einteilig verbunden. Durch den Dichtring 28 sind die Arbeitsräume 3 und 4 voneinander getrennt.

Bei unbelasteter Kolbenstange 5 sind alle Ventile geschlossen und der Kolben 2 in seiner momentanen Lage gehalten. Wird auf die Kolbenstange 5 eine Druckkraft ausgeübt, bewegt sich der Kolben 2 in den Arbeitsraum 4 hinein. Der dabei erzeugte Druck des Öls wirkt auf das Schließglied 16' und hebt dieses entgegen der Kraft der Schraubendruckfeder 18' von seinem Ventilsitz ab. Da nun der Öldruck auf die große Fläche des Ventilkolbens 15' wirkt, bewegt sich dieser schnell in seine linke Endposition. Weiterhin wird das aus der Ventilkammer 14' verdrängte Öl über die Verbindungsleitungen 21 und 24 und die sich öffnende Ventilklappe 26 in die sich vergrößernde Ventilkammer 14 gefördert. Da die Vergrößerung des Arbeitsraumes 3 aufgrund des Volumens der Kolbenstange 5 geringer ist, als die Verkleinerung des Arbeitsraumes 4, wird das überschüssige Öl von der Volumenausgleichskammer 20 unter Verringerung des Volumens des Volumenausgleichselements 23 aufgenommen.

Bei Beendigung der Einwirkung der Druckkraft auf die Kolbenstange 5 werden wieder alle Kammern drucklos und alle Ventile schließen.

Bei einer Zugbewegung der Kolbenstange 5 erfolgt der gleiche Ablauf in umgekehrter Richtung, wobei über die Verbindungsleitungen 21 und 25 und die sich öffnende Ventilklappe 27 Öl nicht nur aus dem Arbeitsraum 3 sondern auch unter Ausdehnung des Volumenausgleichselements 23 Öl aus der Volumenausgleichskammer 20 in den Arbeitsraum 4 strömt.

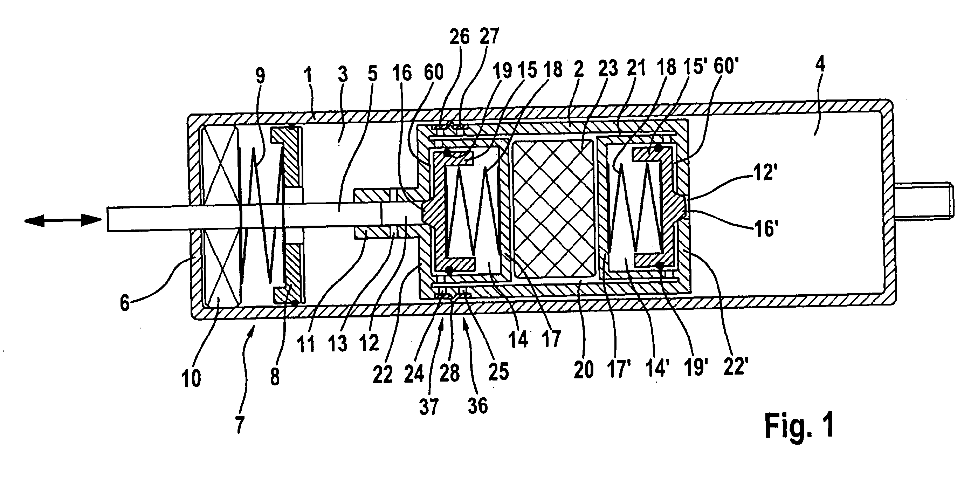

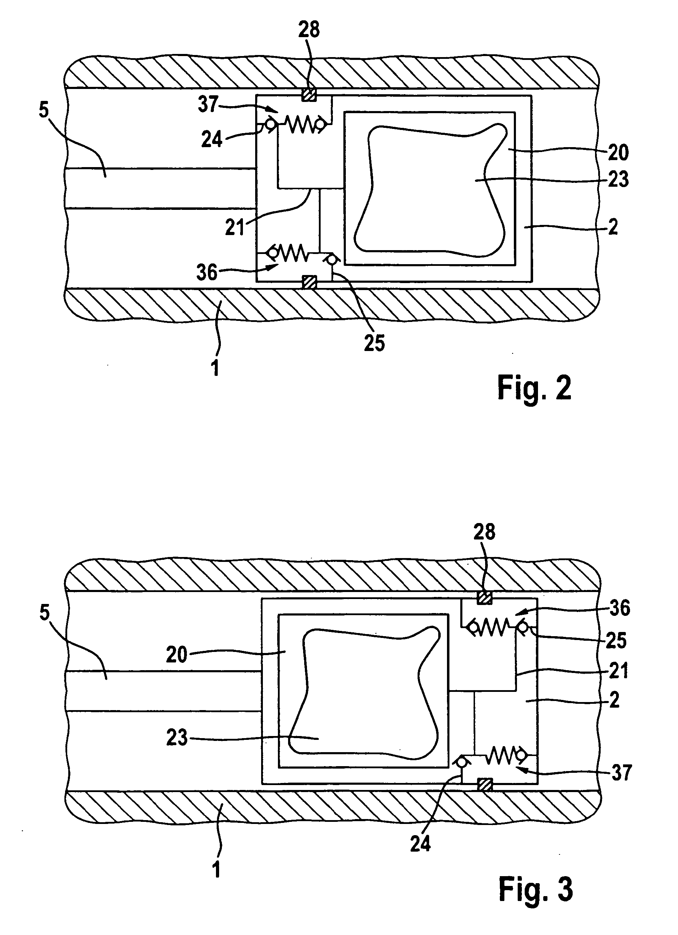

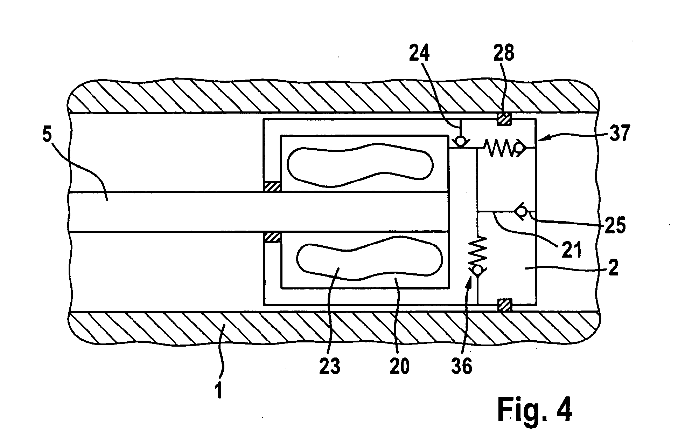

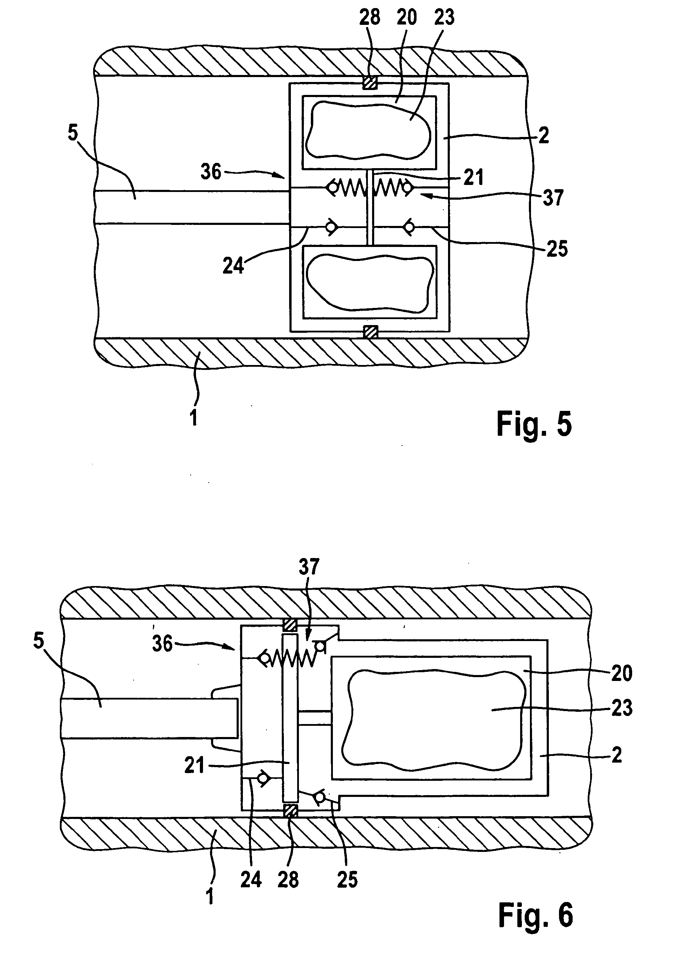

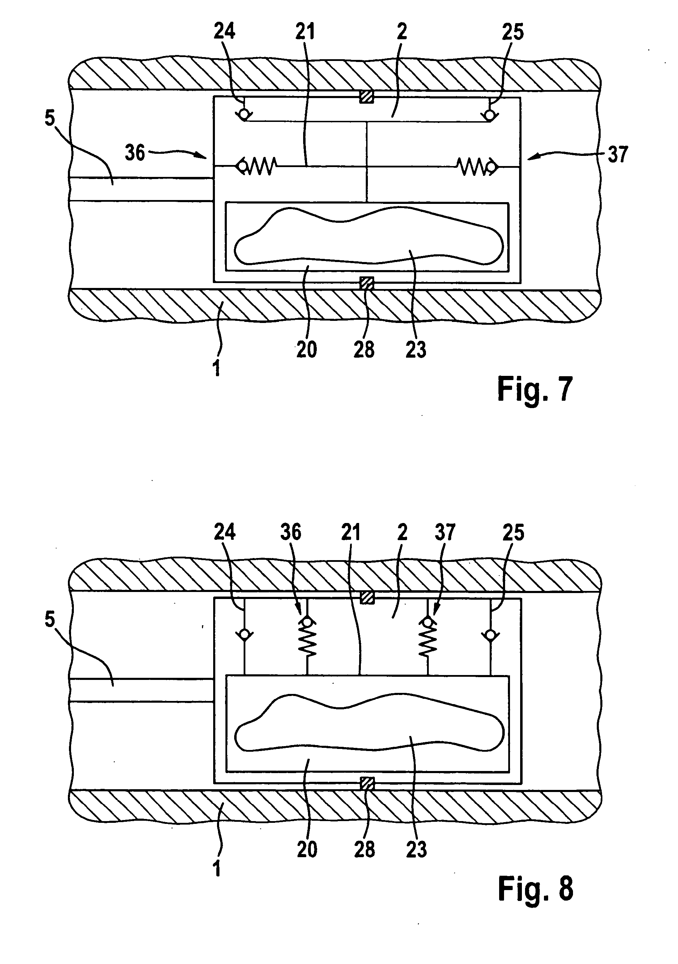

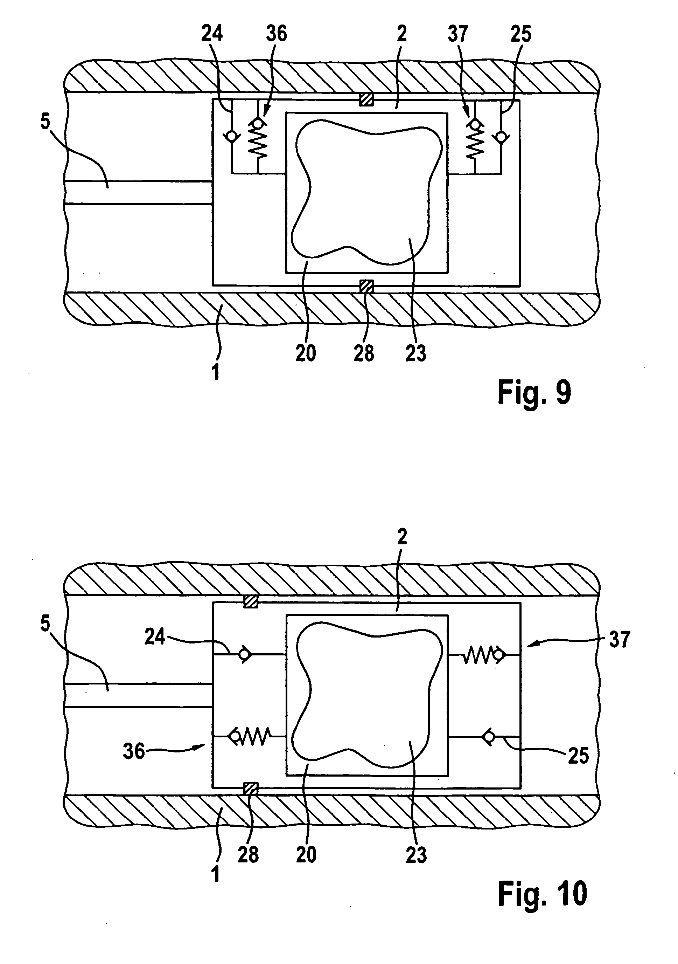

In den Figuren 2 bis 15 sind die verschiedensten Leitungsführungen der Leitungen 21, 24 und 25, Anordnungen der Rückschlagventile 36 und 37 sowie Anordnungen der Volumenausgleichskammer 20 im Kolben 2 dargestellt, wobei die Funktion dieser Teile der Funktion in Figur 1 entspricht.

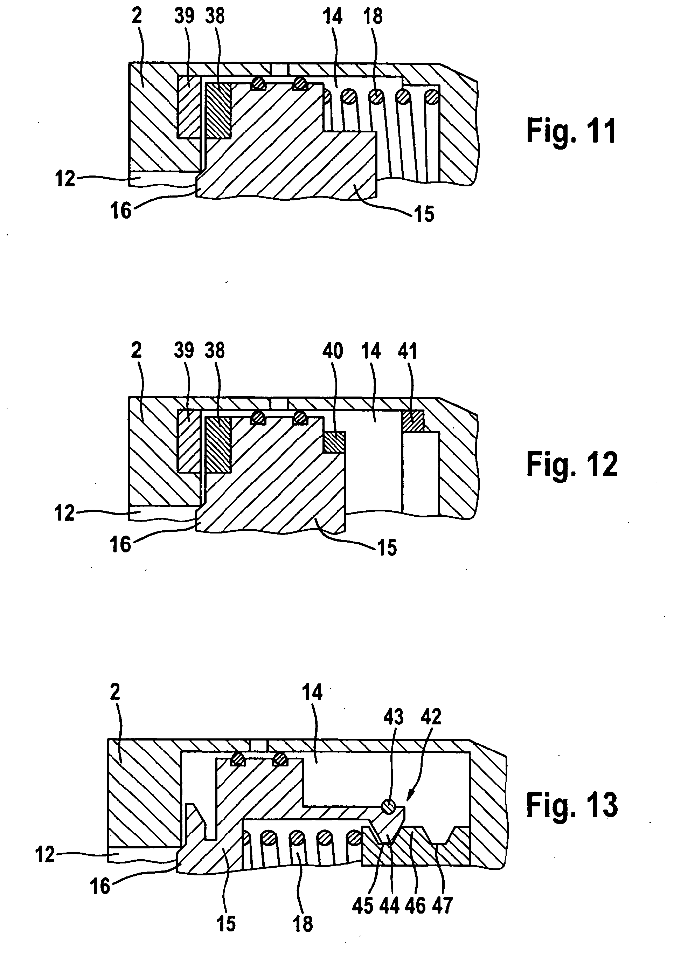

Die Figuren 11 bis 15 zeigen spezielle Ausgestaltungen des Ventilkolbens 15 und seiner Kraftbeaufschlagung. So ist in den Figuren 11 und 12 am Ventilkolben 15 ein ringförmiger Dauermagnet 38 angeordnet, dem gegenüber am Kolben 2 ein entsprechendes ferromagnetisches Bauteil 39 angeordnet ist. Dadurch wird der Ventilkolben 15 in seiner Schließstellung mit hoher Kraft gehalten, die nach einer geringen Bewegung in Öffnungsrichtung bereits stark abfällt und so ein eindeutiges Öffnen des Ventils sicher stellt. Die eigentliche Schließbelastung 15 erfolgt durch die Schraubendruckfeder 18.

Bei dem Ausführungsbeispiel der Figur 12 ist keine Schraubendruckfeder 18 vorhanden. Hier erfolgt auch die Schließbelastung durch die Anziehungskräfte zwischen dem Dauermagnet 38 und dem ferromagnetischem Bauteil 39.

Zusätzlich wird die Schließbelastung noch durch zwei ringförmige Dauermagnete 40, 41 erhöht. Dabei ist der Dauermagnet 40 am Ventilkolben 15 an dessen dem Schließglied 16 abgewandten Ende angeordnet, dem der weitere ringförmige Dauermagnet 41 axial gegenüberliegend am Boden der Ventilkammer 14 angeordnet ist. Die Abstoßungskräfte der mit einander zugewandten gleichen Polen angeordneten Dauermagnete 40, 41 erzeugen die zusätzliche Schließbelastung.

In Figur 13 sind an dem Ventilkolben 15 Rasthaken 42 angeordnet und von einem Federband 23 radial nach innen vorgespannt. In der Schließstellung des Ventilkolbens 15 greift der Rasthaken 42 mit seiner Rastnase 44 in eine rechte Raste 45 ein. Beim Öffnen des Ventils wird die Rastnase 44 über einen Wulst 46 gehoben und rastet in eine linke Raste 47 ein. Die zu überwindende Ausrastkraft bei der umgekehrten Bewegung bildet eine Haltekraft, mit der der Ventilkolben 15 in seiner Offenstellung gehalten wird.

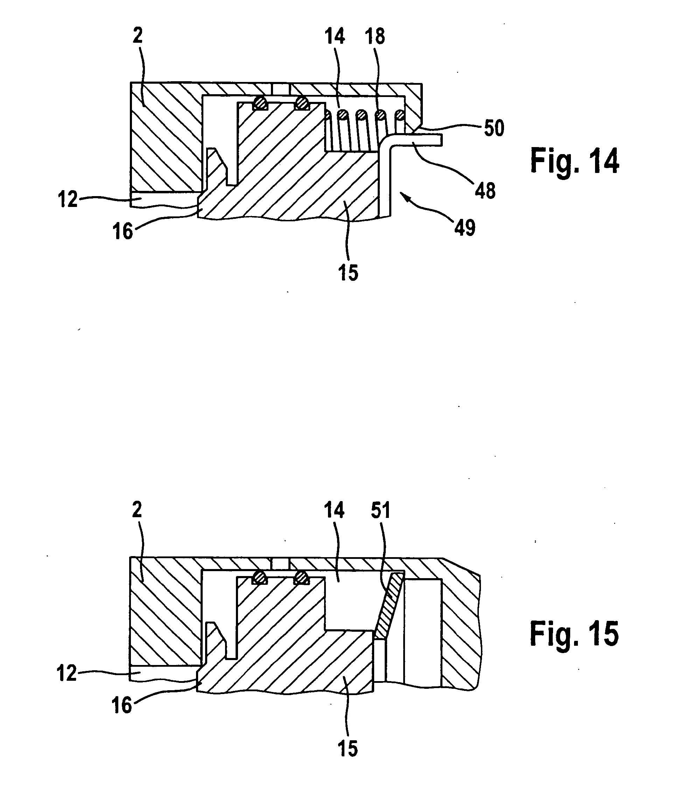

In Figur 14 wird eine solche Haltekraft von einem Schnapparm 48 einer Schnappfeder 49 ausgeübt. Die Schnappfeder 49 ist an dem Ventilkolben 15 befestigt und beaufschlagt mit ihrem Schnapparm 48 den Kolben 2. In der dargestellten Schließstellung erfolgt diese Beaufschlagung radial und hat somit keine Wirkung für eine Axialverschiebung des Ventilkolbens 15. Wird dieser aber in Öffnungsrichtung bewegt, gelangt der Schnapparm 48 in den Bereich einer Rampe 50 des Kolbens 2 und kann mit einer zunehmenden axialen Kraftkomponente auf den Ventilkolben 15 in Öffnungsrichtung einwirken.

In Figur 15 ist der Ventilkolben 15 von radialen Federarmen einer Tellerdruckfeder 51 in Schließrichtung beaufschlagt, deren Kraft über den Bewegungsweg in die Offenstellung degressiv ist.

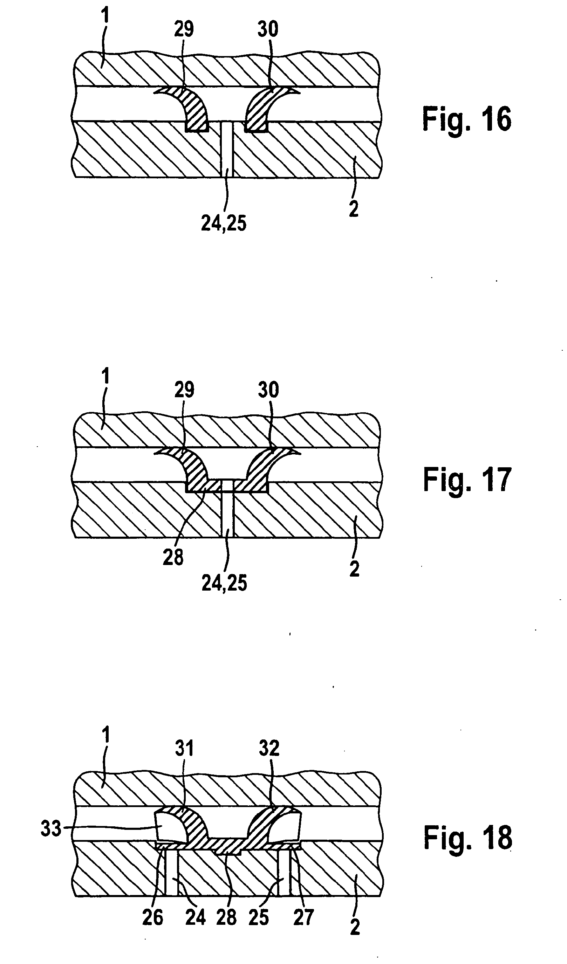

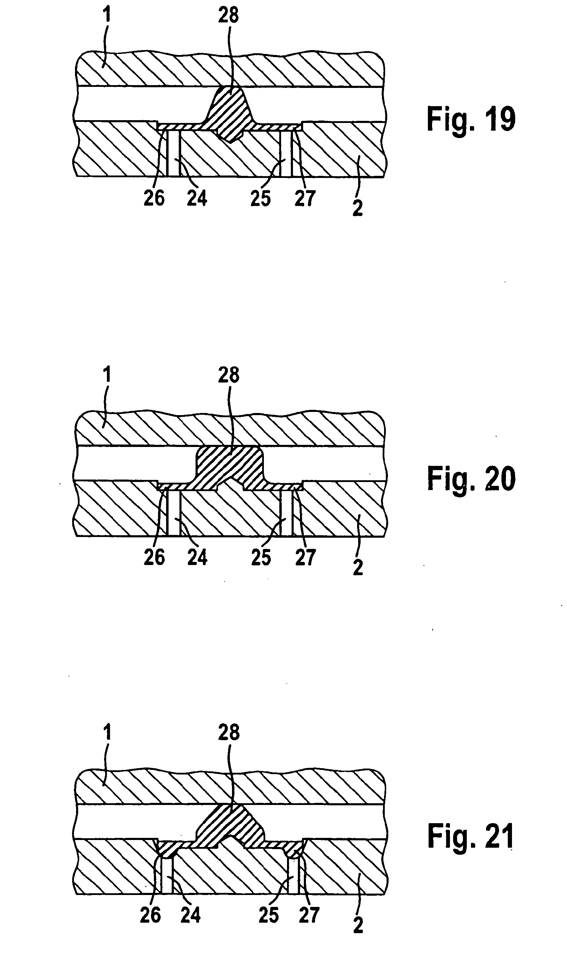

Die Figuren 16 bis 24 zeigen die verschiedensten Ausbildungen der Ventilklappen 26 und 27 der Rückschlagventile 36 und 37 sowie des Dichtrings 28, wobei bis auf die Ausführung in Figur 16 diese drei Elemente als ein Bauteil ausgebildet sind.

Bei den Ausführungsbeispielen der Figuren 16 und 17 sind die Verbindungsleitungen 24 und 25 zu einer Leitung zusammengefaßt, die in den Bereich zwischen zwei Ringdichtlippen 29 und 30 mündet, deren freie Endbereiche voneinander weggerichtet sind. Diese Ringdichtlippen 29 und 30 erfüllen sowohl die Funktion von Ventilklappen als auch die eines die beiden Arbeitsräume 3 und 4 voneinander trennenden Dichtrings.

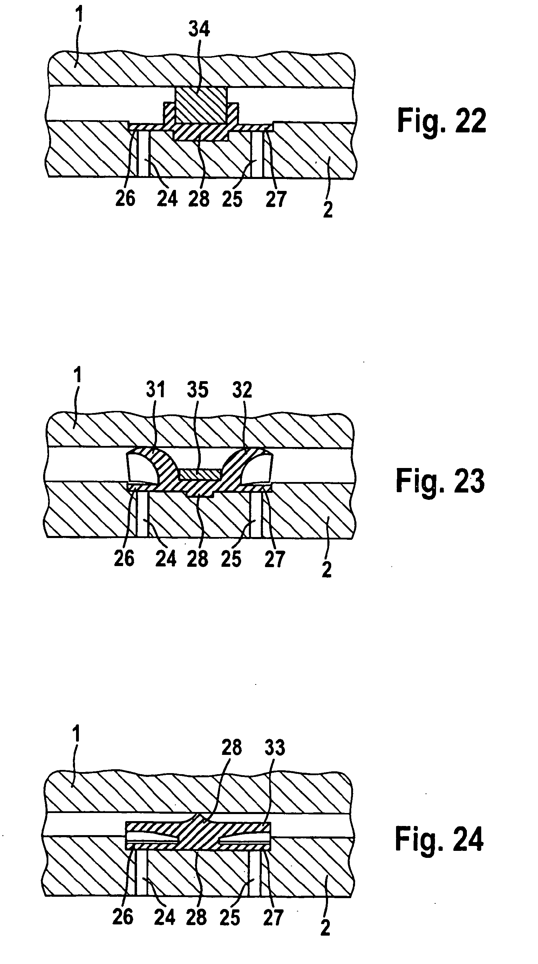

Die Dichtringfunktion wird auch von den Ringdichtlippen 31 und 32 in den Figuren 18 und 23 erfüllt.

Die Ausführungsbeispiele der Figuren 18 und 24 besitzen zusätzlich als integrale Bauteile des Dichtrings ausgebildete Strömungsumleitungen 33.

Zur leichten Verschiebbarkeit liegt in Figur 22 der elastische Dichtring 28 über einen in ihn eingesetzten Gleitring 34 an der Innenwand des Zylinders 1 an.

Zur Fixierung in seine Einbaulage ist der Dichtring 28 in Figur 23 von einem ihn umspannenden Spannring 35 am Kolben 2 gehalten.

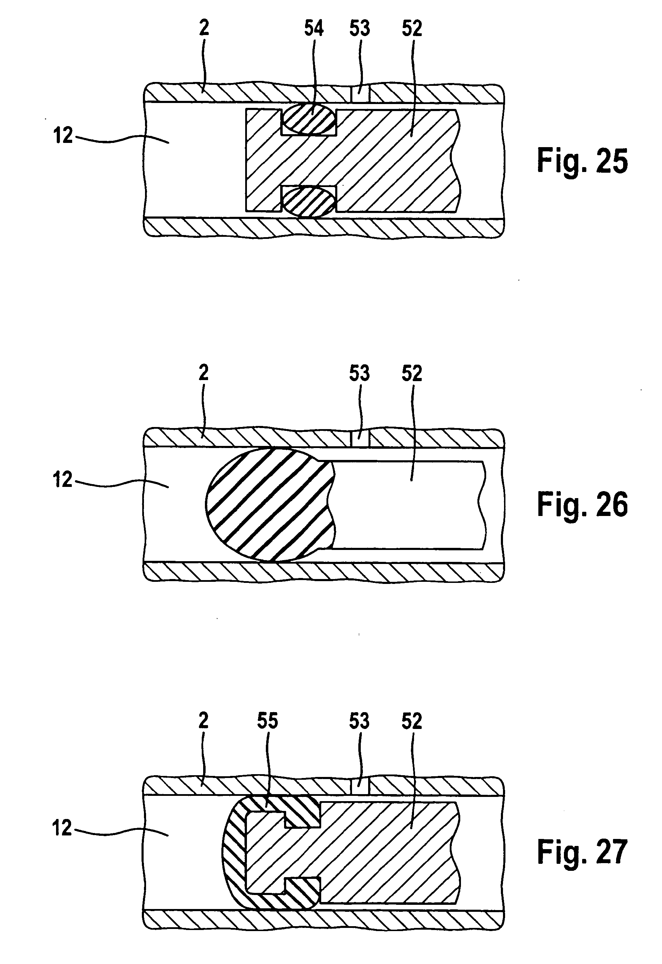

Die Figuren 25 bis 28 zeigen Schließglieder 16 von als Schieberventile ausgebildeten Ventilen, wobei in der Koaxialbohrung 12 ein Ventilschieber 52 axial bewegbar ist, der stirnseitig vom Druck des Arbeitsraums 3 belastet ist. Durch axiale Verschiebung des Ventilschiebers 52 nach rechts wird eine Verbindung vom Arbeitsraum 3 über eine Bohrung 53 zu der nicht dargestellten Verbindungsleitung 21 geöffnet.

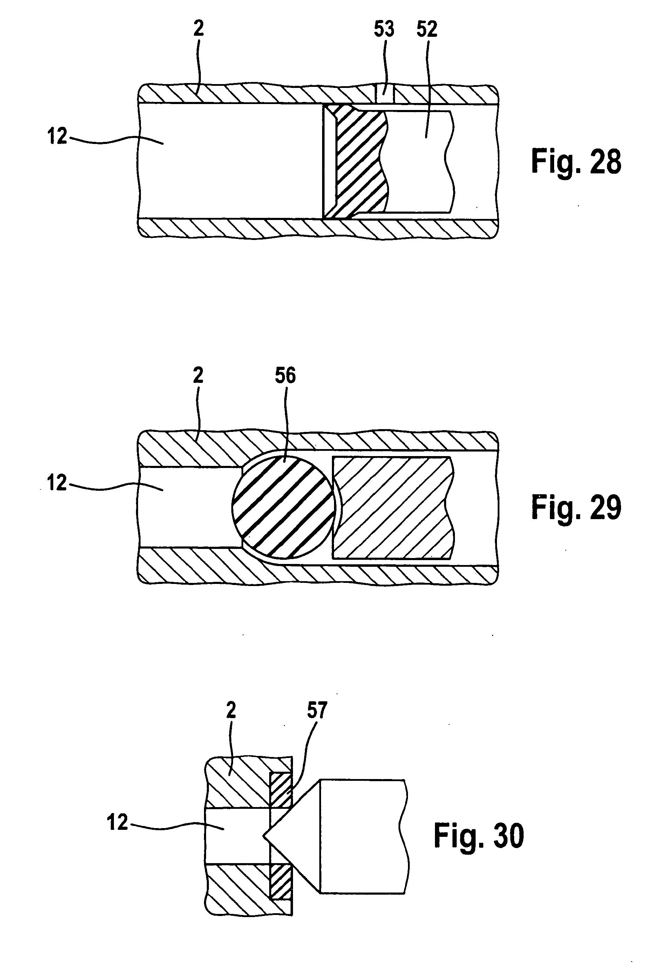

Zur Abdichtung des Ventilschiebers 52 in der Koaxialbohrung 12 ist in Figur 25 der Ventilschieber 52 mit einer Ringdichtung 54 und in Figur 27 mit einer Dichtungskappe 55 versehen und in den Figuren 26 und 28 an ihrem freien Ende vollständig aus einem Elastomer hergestellt.

Die Ausführungsbeispiele 29 bis 33 zeigen Schließglieder 16 von Sitzventilen. Dabei ist in Figur 29 eine elastomere Ventilkugel 56 gegen den Ventilsitz beaufschlagbar.

In Figur 30 ist der Ventilsitz durch einen die Mündung der Koaxialbohrung 12 umschließenden Elastomerring 57 gebildet.

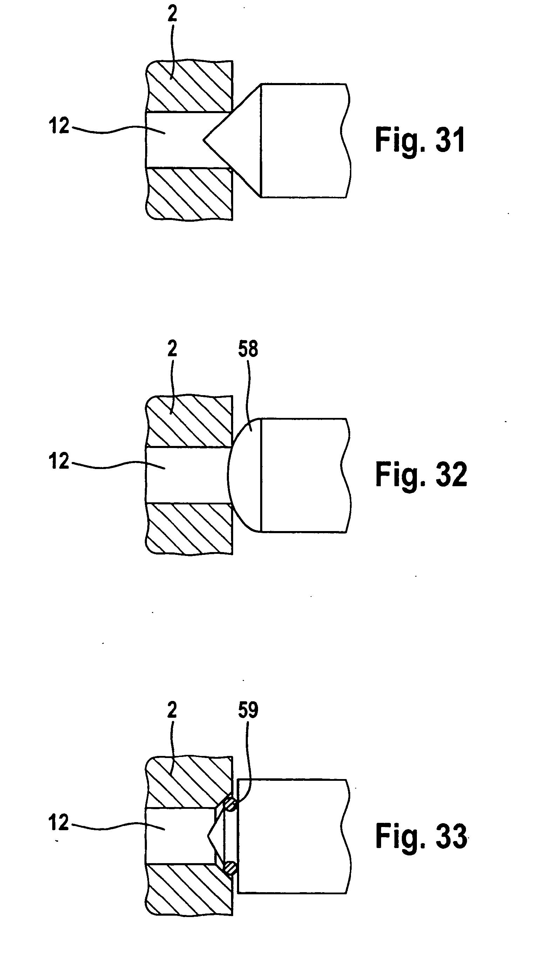

Figur 31 entspricht der Ausführung in Figur 1.

In Figur 32 ist das Schließglied 16 stirnseitig mit einer Elastomerkappe 58 versehen und in Figur 33 trägt das Schließglied 16 an seiner Stirnseite einen Dichtring 59.

### Bezugszeichenliste

- 1: Zylinder
- 2: Kolben
- 3: kolbenstangenseitiger Arbeitsraum
- 4: kolbenstangenferner Arbeitsraum
- 5: Kolbenstange
- 6: Verschlußwand
- 7: Endlagendämpfung
- 8: Dämpfkolben
- 9: Druckfeder
- 10: Dichtung
- 11: Ansatz
- 12: Koaxialbohrung
- 12': Koaxialbohrung
- 13: Radialbohrung
- 14: Ventilkammer
- 14': Ventilkammer
- 15: Ventilkolben
- 15': Ventilkolben
- 16: Schließglied
- 16': Schließglied
- 17: Boden
- 17': Boden
- 18: Schraubendruckfeder
- 18': Schraubendruckfeder
- 19: Dichtung
- 19': Dichtung
- 20: Volumenausgleichskammer
- 21: Verbindungsleitung
- 22: Stirnwand
- 22': Stirnwand
- 23: Volumenausgleichselement
- 24: Verbindungsleitung
- 25: Verbindungsleitung
- 26: Ventilklappe
- 27: Ventilklappe
- 28: Dichtring
- 29: Ringdichtlippe
- 30: Ringdichtlippe
- 31: Ringdichtlippe
- 32: Ringdichtlippe
- 33: Strömungsumleitung
- 34: Gleitring
- 35: Spannring
- 36: zweites Rückschlagventil
- 37: erstes Rückschlagventil
- 38: Dauermagnet
- 39: Bauteil
- 40: Bauteil
- 41: Dauermagnet
- 42: Rasthaken
- 43: Federband
- 44: Rastnase
- 45: linke Raste
- 46: Wulst
- 47: rechte Raste
- 48: Schnapparm
- 49: Schnappfeder
- 50: Rampe
- 51: Tellerdruckfeder
- 52: Ventilschieber
- 53: Bohrung
- 54: Ringdichtung
- 55: Dichtungskappe
- 56: Ventilkugel
- 57: Elastomerring
- 58: Elastomerkappe
- 59: Dichtring
- 60: Raum
- 60': Raum

## Patentansprüche

1. Kolben-Zylinder-Einheit, mit einem geschlossenen Zylinder, in dem ein Kolben (2) über eine ihn radial umschließende Ringdichtung (54) gegenüber dem Zylinder (1) abgedichtet axial verschiebbar geführt ist und den Zylinderinnenraum in einen kolbenstangenseitigen (3) und einen kolbenstangenfernen (4) Arbeitsraum unterteilt, die beide mit einem Fluid, insbesondere mit einer hydraulischen Flüssigkeit gefüllt sind, mit einer einseitigen Kolbenstange (5), die sich durch den kolbenstangenseitigen Arbeitsraum erstreckt und durch eine stirnseitige Verschlußwand (6) des Zylinders dicht nach außen hindurchgeführt ist, mit einem ersten, unter Druck, insbesondere unter hohem Druck öffenbaren Ventil (16') über das der kolbenstangenferne Arbeitsraum mit dem kolbenstangenseitigen Arbeitsraum verbindbar ist und mit einem zweiten, unter hohem Druck öffenbaren Ventil (16), durch das der kolbenstangenseitige Arbeitsraum mit dem kolbenstangenfernen Arbeitsraum verbindbar ist, und mit einer Volumenausgleichskammer (20) zur Aufnahme der gegenüber der Verdrängungsmenge des kolbenstangenseitigen Arbeitsraumes größeren Verdrängungsmenge des kolbenstangenfernen Arbeitsraums, **dadurch gekennzeichnet, daß** die Volumenausgleichskammer (20) in dem Kolben (2) angeordnet ist und der kolbenstangenferne Arbeitsraum (4) über das erste Ventil sowie der kolbenstangenseitige Arbeitsraum (3) über das zweite Ventil mit der Volumenausgleichskammer (20) verbindbar ist und daß die Volumenausgleichskammer (20) über ein erstes Rückschlagventil (37), das einen Ölfluß aus dem Volumenansgleichskammer ermöglicht, mit dem kolbenstangenfernen Arbeitsraum (4) und über ein zweites Rückschlagventil (36), das einen Ölfluß aus dem Volumenansgleichskammer ermöglicht, mit dem kolbenstangenseitigen Arbeitsraum (3) verbindbar ist.

2. Kolben-Zylinder-Einheit nach Anspruch 1,**dadurch gekennzeichnet, daß** das Volumen der Volumenausgleichskammer (20) unter Druckbelastung vergrößerbar und unter Druckentlastung verringerbar ist.

3. Kolben-Zylinder-Einheit nach Anspruch 2, **dadurch gekennzeichnet, daß** in der Volumenausgleichskammer (20) ein unter Druckbelastung sein Volumen reduzierendes und unter Druckentlastung sein Volumen vergrößerndes Volumenausgleichselement (23) angeordnet ist.

4. Kolben-Zylinder-Einheit nach Anspruch 2, **dadurch gekennzeichnet, daß** die Volumenausgleichskammer eine insbesondere als elastische Membran ausgebildete flexible Wand aufweist.

5. Kolben-Zylinder-Einheit nach einem der vorhergehenden Ansprüche, **dadurch gekennzeichnet, daß** das erste und/oder das zweite unter hohem Druck öffenbare Ventil ein drittes oder viertes kraftbelastetes Rückschlagventil ist.

6. Kolben-Zylinder-Einheit nach einem der vorhergehenden Ansprüche, **dadurch gekennzeichnet, daß** das erste und/oder zweite unter hohem Druck öffenbare Ventil ein Schließglied (16, 16') aufweist, das durch eine Druckfeder, insbesondere durch eine Schraubendruckfeder (18, 18') oder eine Tellerdruckfeder (51) in Schließrichtung belastet ist.

7. Kolben-Zylinder-Einheit nach einem der Ansprüche 5 und 6, **dadurch gekennzeichnet, daß** das erste und/oder zweite unter hohem Druck öffenbare Ventil ein Sitzventil ist.

8. Kolben-Zylinder-Einheit nach einem der Ansprüche 5 und 6, **dadurch gekennzeichnet, daß** das erste und/oder zweite unter hohem Druck öffenbare Ventil ein Schieberventil ist.

9. Kolben-Zylinder-Einheit nach einem der Ansprüche 5 bis 8, **dadurch gekennzeichnet, daß** das erste und/oder das zweite unter hohem Druck öffenbare Ventil eine in dem Kolben (2) ausgebildete Ventilkammer (14, 14') aufweist, in der ein Ventilkolben (15, 15') dicht verschiebbar geführt ist, der ein Schließglied (16, 16') trägt, das in Schließrichtung kraftbeaufschlagt und in Öffnungsrichtung vom Druck eines der Arbeitsräume (3, 4) beaufschlagt ist und durch das der Ventildurchgang des ersten und/oder zweiten unter hohem Druck öffenbaren Ventils absperrbar ist.

10. Kolben-Zylinder-Einheit nach Anspruch 8, **dadurch gekennzeichnet, daß** das Schließglied (16, 16') oder der Ventilkolben (15, 15') in Schließrichtung federbeaufschlagt ist.

11. Kolben-Zylinder-Einheit nach Anspruch 10, **dadurch gekennzeichnet, daß** das Schließglied oder der Ventilkolben (15, 15') in Schließrichtung von einem oder mehreren an dem Kolben (2) abgestützten Federarmen in Schließrichtung kraftbeaufschlagt ist, deren Kraft auf dem Bewegungsweg des Schließglieds oder des Ventilkolbens (15, 15') in die Öffnungsstellung zumindest im letzten Teil des Bewegungsweges degressiv und in der Öffnungsstellung zumindest weitgehend null ist.

12. Kolben-Zylinder-Einheit nach einem der Ansprüche 8 und 9, **dadurch gekennzeichnet, daß** das Schließglied oder der Ventilkolben (15, 15') in Schließrichtung durch Magnetkräfte beaufschlagt ist.

13. Kolben-Zylinder-Einheit nach Anspruch 12, **dadurch gekennzeichnet, daß** an dem Ventilkolben (15, 15') oder dem Kolben ein Dauermagnet (38) und dem Dauermagnet (38) in Bewegungsrichtung des Ventilkolbens (15, 15') gegenüberliegend am Kolben (2) oder Ventilkolben ein ferromagnetisches Bauteil (39) angeordnet ist.

14. Kolben-Zylinder-Einheit nach einem der vorhergehenden Ansprüche, **dadurch gekennzeichnet, daß** das Schließglied oder der Ventilkolben (15, 15') in der Öffnungsstellung des ersten und/oder zweiten Ventils mit einer Haltekraft haltbar ist, die kleiner als die entgegengerichtete Schließkraft ist, in Addition mit einer Druckbeaufschlagung des Ventils aber größer ist.

15. Kolben-Zylinder-Einheit nach Anspruch 14, **dadurch gekennzeichnet, daß** der Ventilkolben (15, 15') oder der Kolben in der Öffnungsstellung mit einem Rastelement in eine Raste (47) des Kolbens (2) oder des Ventilkolbens einrastbar ist und die Ausrastkraft des Rastelements aus der Raste (47) die Haltekraft ist.

16. Kolben-Zylinder-Einheit nach Anspruch 14, **dadurch gekennzeichnet, daß** an dem Ventilkolben eine Schnappfeder (49) angeordnet ist, die mit dem freien Ende ihres Schnapparmes (48) an dem Kolben (2) abgestützt ist, wobei in der Schließstellung des Ventilkolbens (15, 15') der Schnapparm (48) in Axialrichtung zumindest weitgehend kraftlos an dem Kolben (2) in Anlage ist und in der Öffnungsstellung des Ventilkolbens (15, 15') den Kolben (2) die Haltekraft erzeugend beaufschlagt.

17. Kolben-Zylinder-Einheit nach einem der Ansprüche 1 bis 13, **dadurch gekennzeichnet, daß** auf der dem Schießglied (16, 16') abgewandten Seite an dem Ventilkolben (15, 15') ein Dauermagnet (40) und diesem zugewandt an dem Kolben (2, 2') ein weiterer Dauermagnet (41) einander abstoßend angeordnet sind.

18. Zylinder-Einheit nach einem der vorhergehenden Ansprüche, **dadurch gekennzeichnet, daß** die Ringdichtung des Kolbens das erste und das zweite Rückschlagventil (37, 36) bildend ausgebildet ist.

19. Kolben-Zylinder-Einheit nach Anspruch 18, **dadurch gekennzeichnet, daß** die Ringdichtung im axialen Abstand voneinander zwei Ringdichtlippen (29, 30) aufweist, deren an der Innenwand des Zylinders (1) anliegende freien Endbereiche voneinander weg gerichtet sind und daß die Volumenausgleichskammer (20) über eine Verbindungsleitung (24, 25)) mit dem Raum zwischen den Ringdichtlippen (29, 30) verbunden ist.

20. Kolben-Zylinder-Einheit nach Anspruch 18, **dadurch gekennzeichnet, daß** die Ringdichtung des Kolbens (2) einen elastisch an der Innenwand des Zylinders (1) anliegenden Dichtring (28) aufweist, an dessen am Kolben (2) angeordneten Fußbereich gegensinnig axial sich wegerstreckende Ventilklappen (26, 27) angeformt sind, durch die radial am Kolben (2) in den Zylinder (1) mündende Verbindungsleitungen (24, 25) verschließbar sind, die zur Volumenausgleichskammer (20) führen.

## Claims

1. Piston-cylinder unit, having a closed cylinder in which a piston (2) is guided in an axially displaceable manner sealed off from the cylinder (1) via an annular seal (54) radially surrounding it, and divides the cylinder interior into a working space near the piston rod (3) and a working space away from the piston rod (4), the two working spaces being filled with a fluid, in particular with a hydraulic fluid, having a one-sided piston rod (5) which extends through the working space near the piston rod and is guided in a sealed manner to the outside through an end closing wall (6) of the cylinder, having a first valve (16') which can be opened under pressure, in particular under high pressure, and via which the working space away from the piston rod can be connected to the working space near the piston rod, and having a second valve (16) which can be opened under high pressure and by means of which the working space near the piston rod can be connected to the working space away from the piston rod, and having a volume-equalizing chamber (20) for receiving the amount displaced from the working space away from the piston rod, which is greater than the amount displaced from the working space near the piston rod, **characterized in that** the volume-equalizing chamber (20) is arranged in the piston (2), and the working space (4) away from the piston rod can be connected to the volume-equalizing chamber (20) via the first valve, and the working space (3) near the piston rod can be connected to it via the second valve, and **in that** the volume-equalizing chamber (20) can be connected to the working space (4) away from the piston rod via a first nonreturn valve (37), which allows an oil flow from the volume-equalizing chamber, and can be connected to the working space (3) near the piston rod via a second nonreturn valve (36), which allows an oil flow from the volume-equalizing chamber.

2. Piston-cylinder unit according to Claim 1, **characterized in that** the volume of the volume-equalizing chamber (20) can be increased under pressure loading and can be reduced under pressure relief.

3. Piston-cylinder unit according to Claim 2, **characterized in that** a volume-equalizing element (23) which reduces its volume under pressure loading and increases its volume under pressure relief is arranged in the volume-equalizing chamber (20).

4. Piston-cylinder unit according to Claim 2, **characterized in that** the volume-equalizing chamber has a flexible wall designed, in particular, as an elastic diaphragm.

5. Piston-cylinder unit according to one of the preceding claims, **characterized in that** the first and/or the second valve, which can be opened under high pressure, is a third or fourth force-loaded nonreturn valve.

6. Piston-cylinder unit according to one of the preceding claims, **characterized in that** the first and/or second valve, which can be opened under high pressure, has a closing element (16, 16') which is loaded in the closing direction by a compression spring, in particular by a helical compression spring (18, 18') or a cup-type compression spring (51).

7. Piston-cylinder unit according to either of Claims 5 and 6, **characterized in that** the first and/or second valve, which can be opened under high pressure, is a seat valve.

8. Piston-cylinder unit according to either of Claims 5 and 6, **characterized in that** the first and/or second valve, which can be opened under high pressure, is a slide valve.

9. Piston-cylinder unit according to one of Claims 5 to 8, **characterized in that** the first and/or the second valve, which can be opened under high pressure, has a valve chamber (14, 14') which is formed in the piston (2) and in which a valve piston (15, 15') is guided displaceably in a sealed manner, the said valve piston bearing a closing element (16, 16') which is acted upon in the closing direction by a force and is acted upon in the opening direction by the pressure of one of the working spaces (3, 4), and by means of which the valve passage of the first and/or second valve, which can be opened under high pressure, can be blocked.

10. Piston-cylinder unit according to Claim 8, **characterized in that** the closing element (16, 16') or the valve piston (15, 15') is acted upon in the closing direction by a spring.

11. Piston-cylinder unit according to Claim 10, **characterized in that** the closing element or the valve piston (15, 15') is acted upon in the closing direction by a force from one or more spring arms which are supported on the piston (2) and the force of which is degressive on the path of movement of the closing element or the valve piston (15, 15') into the opening position, at least in the last part of the path of movement, and is at least largely zero in the opening position.

12. Piston-cylinder unit according to either of Claims 8 and 9, **characterized in that** the closing element or the valve piston (15, 15') is acted upon in the closing direction by magnetic forces.

13. Piston-cylinder unit according to Claim 12, **characterized in that** a permanent magnet (38) is arranged on the valve piston (15, 15') or the piston, and a ferromagnetic component (39) is arranged on the piston (2) or valve piston opposite the permanent magnet (38) in the direction of movement of the valve piston (15, 15').

14. Piston-cylinder unit according to one of the preceding claims, **characterized in that** the closing element or the valve piston (15, 15') can be retained in the opening position of the first and/or second valve with a retaining force which is smaller than the oppositely directed closing force, but added to a pressurization of the valve is larger.

15. Piston-cylinder unit according to Claim 14, **characterized in that** the valve piston (15, 15') or the piston can be latched in the opening position with a latching element into a latch (47) on the piston (2) or the valve piston, and the force for unlatching the latching element from the latch (47) is the retaining force.

16. Piston-cylinder unit according to Claim 4, **characterized in that** a snap spring (49) which is supported with the free end of its snap arm (48) on the piston (2) is arranged on the valve piston, the snap arm (48) being in contact with the piston (2) in the axial direction at least largely without any force in the closed position of the valve piston (15, 15') and, in the opening position of the valve piston (15, 15'), acting upon the piston (2), thus producing the retaining force.

17. Piston-cylinder unit according to one of Claims 1 to 13, **characterized in that** on the side facing away from the closing element (16, 16') a permanent magnet (40) is arranged on the valve piston (15, 15') and, facing said permanent magnet, a further permanent magnet (41) is arranged on the piston (2, 2'), said permanent magnets butting against each other.

18. Piston-cylinder unit according to one of the preceding claims, **characterized in that** the annular seal of the piston is designed such that it forms the first and the second nonreturn valve (37, 36).

19. Piston-cylinder unit according to Claim 18, **characterized in that** the annular seal has two annular sealing lips (29, 30) at an axial distance from each other, of which the free end regions, which bear against the inner wall of the cylinder (1), are directed away from each other, and **in that** the volume-equalizing chamber (20) is connected to the space between the annular sealing lips (29, 30) via a connecting line (24, 25).

20. Piston-cylinder unit according to Claim 18, **characterized in that** the annular seal of the piston (2) has a sealing ring (28) which bears elastically against the inner wall of the cylinder (1) and on whose foot region, which is arranged on the piston (2), valve flaps (26, 27) which extend away axially in opposite directions are integrally formed, said valve flaps being able to be used to close connecting lines (24, 25) which open radially on the piston (2) into the cylinder (1) and lead to the volume-equalizing chamber (20).

## Revendications

1. Unité piston-cylindre, avec un cylindre fermé, dans lequel un piston (2) est guidé en coulissement axial en étant étanché par rapport au cylindre (1) au moyen d'un joint d'étanchéité annulaire (54) l'entourant radialement et divise l'espace intérieur du cylindre en une chambre de travail (3) côté tige de piston et une chambre de travail (4) éloignée de la tige de piston, chambres qui sont toutes deux remplies d'un fluide, notamment d'un liquide hydraulique, avec d'un côté une tige de piston (5), qui s'étend à travers la chambre de travail côté tige de piston et est dirigée vers l'extérieur en traversant en étanchéité une paroi de fermeture frontale (6) du cylindre, avec une première soupape (16') pouvant s'ouvrir sous une pression, notamment sous une pression importante, qui permet de relier la chambre de travail éloignée de la tige de piston à la chambre de travail côté tige de piston, avec une deuxième soupape (16) pouvant s'ouvrir sous une pression importante, qui permet de relier la chambre de travail côté tige de piston à la chambre de travail éloignée de la tige de piston, et avec une chambre (20) de compensation de volume destinée à recevoir la quantité déplacée de la chambre de travail éloignée de la tige de piston qui dépasse la quantité déplacée de la chambre de travail côté tige de piston, **caractérisée en ce que** la chambre (20) de compensation de volume est disposée dans le piston (2) et la chambre de travail (4) éloignée de la tige de piston ainsi que la chambre de travail (3) côté tige de piston peuvent être reliées à la chambre (20) de compensation de volume par l'intermédiaire respectivement de la première soupape et de la deuxième soupape, et **en ce que** la chambre (20) de compensation de volume peut être reliée à la chambre de travail (4) éloignée de la tige de piston et à la chambre de travail (3) côté tige de piston par l'intermédiaire respectivement d'une première soupape (37) de non-retour et d'une deuxième soupape (36) de non-retour, soupapes qui autorisent le passage du fluide en provenance de la chambre de compensation de volume.

2. Unité piston-cylindre selon la revendication 1, **caractérisée en ce que** le volume de la chambre (20) de compensation de volume peut être augmenté sous une sollicitation en pression et diminué sous une détente de pression.

3. Unité piston-cylindre selon la revendication 2, **caractérisée en ce qu'**un élément (23) de compensation de volume qui réduit son volume sous une sollicitation en pression et augmente son volume sous une détente de pression est disposé dans la chambre (20) de compensation de volume.

4. Unité piston-cylindre selon la revendication 2, **caractérisée en ce que** la chambre de compensation de volume présente une paroi flexible réalisée notamment sous forme de membrane élastique.

5. Unité piston-cylindre selon l'une quelconque des revendications précédentes, **caractérisée en ce que** la première et/ou la deuxième soupape pouvant s'ouvrir sous une pression importante est une troisième et/ou une quatrième soupape de non-retour sollicitée en force.

6. Unité piston-cylindre selon l'une quelconque des revendications précédentes, **caractérisée en ce que** la première et/ou la deuxième soupape pouvant s'ouvrir sous une pression importante présente un obturateur (16, 16') qui est sollicité dans la direction de fermeture par un ressort de pression, notamment un ressort de pression à boudin (18, 18') ou une rondelle-ressort de pression (51).

7. Unité piston-cylindre selon la revendication 5 ou 6, **caractérisée en ce que** la première et/ou la deuxième soupape pouvant s'ouvrir sous une pression importante est une soupape à siège.

8. Unité piston-cylindre selon la revendication 5 ou 6, **caractérisée en ce que** la première et/ou la deuxième soupape pouvant s'ouvrir sous une pression importante est une soupape à tiroir.

9. Unité piston-cylindre selon l'une quelconque des revendications 5 à 8, **caractérisée en ce que** la première et/ou la deuxième soupape pouvant s'ouvrir sous une pression importante présente une chambre de soupape (14, 14') formée dans le piston (2), dans laquelle est guidé en coulissement en étanchéité un piston de soupape (15, 15') qui porte un obturateur (16, 16') qui est sollicité en force dans la direction de fermeture et qui est sollicité dans la direction d'ouverture par la pression d'une des chambres de travail (3, 4), et qui permet de fermer le passage de soupape de la première et/ou de la deuxième soupape pouvant s'ouvrir sous une pression importante.

10. Unité piston-cylindre selon la revendication 8, **caractérisée en ce que** l'obturateur (16, 16') ou le piston de soupape (15, 15') est sollicité par ressort dans la direction de fermeture.

11. Unité piston-cylindre selon la revendication 10, **caractérisée en ce que** l'obturateur ou le piston de soupape (15, 15') est sollicité en force dans la direction de fermeture par un ou plusieurs bras de ressort qui s'appuient contre le piston (2) et dont la force est dégressive sur la course de déplacement de l'obturateur ou du piston de soupape (15, 15') dans la position ouverte au moins dans la dernière partie de la course de déplacement, et est au moins essentiellement nulle dans la position ouverte.

12. Unité piston-cylindre selon la revendication 8 ou 9, **caractérisée en ce que** l'obturateur ou le piston de soupape (15, 15') est sollicité dans la direction de fermeture par des forces magnétiques.

13. Unité piston-cylindre selon la revendication 12, **caractérisée en ce qu'**un aimant permanent (38) est disposé sur le piston de soupape (15, 15') ou le piston, et un élément ferromagnétique (39) est disposé sur le piston (2) ou le piston de soupape en vis-à-vis de l'aimant permanent (38) dans la direction de déplacement du piston de soupape (15, 15').

14. Unité piston-cylindre selon l'une quelconque des revendications précédentes, **caractérisée en ce que** l'obturateur ou le piston de soupape (15, 15') peut être maintenu dans la position ouverte de la première et/ou de la deuxième soupape par une force de maintien qui est inférieure à la force de fermeture opposée, mais lui est supérieure en y ajoutant une sollicitation en pression de la soupape.

15. Unité piston-cylindre selon la revendication 14, **caractérisée en ce que** le piston de soupape (15, 15') ou le piston peut être enclenché dans la position ouverte, par un élément de crantage, dans un cran d'arrêt (47) du piston (2) ou du piston de soupape, et la force pour désenclencher du cran d'arrêt (47) l'élément de crantage est la force de maintien.

16. Unité piston-cylindre selon la revendication 14, **caractérisée en ce qu'**un ressort à déclic (49) est disposé sur le piston de soupape et s'appuie contre le piston (2) par l'extrémité libre de son bras d'enclenchement (48), sachant que, dans la position fermée du piston de soupape (15, 15'), le bras d'enclenchement (48) s'applique contre le piston (2) au moins essentiellement sans force en direction axiale et que, dans la position ouverte du piston de soupape (15, 15'), il sollicite le piston (2) en produisant la force de maintien.

17. Unité piston-cylindre selon l'une quelconque des revendications 1 à 13, **caractérisée en ce qu'**un aimant permanent (40) est disposé sur le piston de soupape (15, 15') sur le côté opposé à l'obturateur (16, 16'), et un autre aimant permanent (41) est disposé en vis-à-vis du précédent sur le piston (2, 2'), les deux aimants se repoussant mutuellement.

18. Unité piston-cylindre selon l'une quelconque des revendications précédentes, **caractérisée en ce que** le joint d'étanchéité annulaire du piston est conçu pour former la première et la deuxième soupapes (37, 36) de non-retour.

19. Unité piston-cylindre selon la revendication 18, **caractérisée en ce que** le joint d'étanchéité annulaire présente deux lèvres d'étanchéité annulaires (29, 30) à distance axiale l'une de l'autre, dont les régions terminales libres appliquées contre la paroi intérieure du cylindre (1) sont dirigées en éloignement l'une de l'autre, et **en ce que** la chambre (20) de compensation de volume est reliée par une conduite de liaison (24, 25) à l'espace situé entre les lèvres d'étanchéité annulaires (29, 30).

20. Unité piston-cylindre selon la revendication 18, **caractérisée en ce que** le joint d'étanchéité annulaire du piston (2) présente une bague d'étanchéité (28) qui est appliquée élastiquement contre la paroi intérieure du cylindre (1) et sur la région de base de laquelle, disposée sur le piston (2), sont formés des clapets de soupape (26, 27) s'éloignant axialement l'un de l'autre en sens opposés, qui permettent de fermer des conduites de liaison (24, 25) qui débouchent radialement sur le piston (2) dans le cylindre (1) et mènent à la chambre (20) de compensation de volume.
